# EUROPÄISCHE PATENTSCHRIFT

(11) **EP 0 333 259 B1**
(45) Veröffentlichungstag und Bekanntmachung des Hinweises auf die Patenterteilung: **14.12.1994**
(21) Anmeldenummer: 89200595.0
(22) Anmeldetag: 09.03.1989
(51) Int. Cl.: G11B 7/085, G11B 7/08, G11B 7/09, H02K 41/035

(54) **Elektrodynamischer Aktuator für optische Speichersysteme**
Electrodynamic actuator for optical recording system
Actionneur électrodynamique pour système d'enregistrement optique

(30) Priorität: 15.03.1988 DE 3808510
(43) Veröffentlichungstag der Anmeldung: 20.09.1989
(73) Patentinhaber: Philips Patentverwaltung GmbH, 22335 Hamburg (DE); Philips Electronics N.V., 5621 BA Eindhoven (NL)
(72) Erfinder: Meyer, Karl-Hanns, Dr.-Ing., D-5100 Aachen (DE)
(74) Vertreter: von Laue, Hanns-Ulrich, Dipl.-Ing.

(56) Entgegenhaltungen:
- DE-A- 2 542 299
- DE-A- 3 315 848
- US-A- 4 613 962

## Beschreibung

Die Erfindung bezieht sich auf einen elektrodynamischen Aktuator für optische Speichersysteme mit einer elektromechanischen Stellvorrichtung, die eine optische Ein- bzw. Ausleseeinheit zu Ein- bzw. Auslese-Arbeitspositionen gegenüber einem Speichermedium bewegt, wobei ein von der optischen Einheit auf die Arbeitspositionen gelenktes Strahlenbündel gegenüber diesen Arbeitspositionen durch Verstellen der Optik der optischen Einheit fokussiert wird, wobei die Stellvorrichtung aus einem Linearmotor mit parallel und auf Abstand angeordneten Statorteilen besteht, die gebildet werden von stabförmigen Statoreisen, auf denen statorfeste die Statoreisen umschließende Induktionsspulen angeordnet sind, wobei zwischen diesen Statorteilen ein Dauermagnet vorgesehen ist, der zwischen den axialen Enden der Statorteile längsverschieblich in einer Führungsrichtung geführt ist, und wobei dieser Dauermagnet die Optik der optischen Einheit trägt und ein magnetisches Feld senkrecht zur Führungsrichtung und parallel zu einer Mittelebene besitzt, in welcher die Statoreisen, die Induktionsspulen und der Dauermagnet selbst angeordnet sind.

Elektrodynamische Aktuatoren dieser Art sind bekannt aus der Audio-, Video- und Daten-Technik, ein derartiger Aktuator ist aus der US-A-4613962 bekannt (siehe US-A-4613962, Figuren 6 und 7). Ein gebündelter Lichtstrahl wird von einer Optik auf ein Speichermedium geleitet, das beispielsweise eine umlaufende Platte sein kann (DE 28 10 616 A1). In dieser DE-OS erfolgt mit Hilfe des Strahlenbündels zwar nur ein Auslesen; es ist aber ebensogut ein Einschreiben möglich, wie es aus der DE-OS 16 13 987 bekannt ist. Sowohl beim Einlesen als beim Auslesen ist es erforderlich, den Lesestrahl zunächst einmal mittels einer elektromechanischen Stellvorrichtung in die Ein- bzw. Auslese-Arbeitsposition zu bringen und in dieser Position dann das Objektiv auf die genau ein- oder auszulesende Stelle zu fokussieren.

Eine bekannte elektromechanische Stellvorrichtung besteht aus einem Schwenkarm, der das Strahlenbündel etwa radial über die Plattenoberfläche hinweg fahren kann. Dieser Verfahrvorgang wird überlagert von einer zusätzlichen Radial- und Tangential-Korrektur sowie von dem Fokussiervorgang vertikal zur Plattenoberfläche. Außer der einstufigen Radialpositionierung sind auch zweistufige Radialpositionierungen bekannt, bei denen ein Schlitten zunächst nur die ungefähre Position anfährt und die Feinpositionierung dann von einer zweiten Stufe durchgeführt wird. Zwei Positionierungsstufen sind aber aufwendig.

Der bekannte elektrodynamische Aktuator für lichtoptische Speichersysteme führt also Bewegungen in drei Richtungen aus, von denen zwei aufeinander senkrecht stehen. Die Tangential-Korrektur verliert zunehmend an Bedeutung, und es bleiben für eine Führung des Lichtstrahles in zwei senkrecht aufeinander stehenden Richtungen, nämlich radial zur Drehachse und vertikal zum Speichermedium von Bedeutung.

Die bekannten Aktuatoren sind relativ verwickelt aufgebaut. Die Optik kann schwimmend in einem Magnetsystem gelagert sein, das über ein mit der Optik verbundenes Spulensystem im Magnetfeld seine Ausrichtung erhält. Zuvor muß aber die elektromechanische Stellvorrichtung die optische Einheit bereits in die Arbeitsposition gebracht haben. Ein Aktuator, der eine Korrektur in radialer, vertikaler und tangentialer Richtung vornehmen kann, ist beispielsweise bekannt aus der DE 35 29 091 A1.

Aus der US 46 13 962 (Figuren 6, 7) ist ein elektrodynamischer Aktuator für optische Speichersysteme bekannt, bei dem eine optische Ein- bzw. Ausleseeinheit gegenüber einem plattenförmigen Speichermedium auf einen Schlitten bewegbar ist, der den beweglichen Teil eines Linearmotorsbildet und dazu einen Dauermagneten trägt. Der Stator des Linearmotors besteht aus parallel angeordneten, stabförmigen Statoreisen, auf denen statorfest Induktionsspulen angeordnet sind. Der Schlitten mit seinem Dauermagneten ist zwischen den axialen Enden der Statorteile längsverschieblich geführt und trägt die optische Einheit. Der Dauermagnet ist mit Polschuhen versehen, die den Magnetfluß aus einer Parallelebene zur Mittelebene durch die Statoreisen umlenken in Richtung auf die Mittelebene der Statoreisen und die Statoreisen selbst. Diese Magnetanordnung gestattet keine Fokusbewegungen der optischen Einheit.

Aus der DE 25 42 299 C3 ist es bekannt, bei einem Linearmotor auf den stabförmigen Statoreisen eine Anzahl von statorfesten, in Längsrichtung aufeinander folgenden, separat zu- und abschaltbaren Induktionsspulen anzuordnen, über die das Statorfeld bereichsweise hinweg bewegbar ist, dem der Dauermagnet des Schlittens dann folgt.

Aus der EP 0 112 595 A1 ist es bekannt, die Optik eines elektrodynamischen Aktuators an Federarmen elastisch aufzuhängen, um der optischen Einheit Fokusbewegungen zu ermöglichen. Bei dieser Konstruktion sind die Spulen des Linearmotors am Schlitten und Dauermagneten am Stator ortsfest angeordnet. Der Schlitten trägt noch weitere Spulen, die die Schlittenführungsstangen umschließen und für die Linearbewegung verantwortlich sind. Alle Spulen dieses Systems benötigen flexible Anschlüsse.

Es ist Aufgabe der Erfindung, einen elektrodynamischen Aktuator zu schaffen, bei dem Radial-Korrektur und radiales Verfahren in einem einheitlichen Bewegungssystem vorgenommen werden, das auch die Vertikal-Korrektur zur Fokussierung ausführen kann.

Die gestellte Aufgabe ist gemäß dem Kennzeichen des Anspruchs 1 dadurch gelöst,
a) daß der Dauermagnet zwischen den Statorteilen gegenüber der gemeinsamen Mittelebene bewegbar ist,
b) daß auf jedem stabförmigen Statoreisen mehrere, in Längsrichtung aufeinander folgende, separat zu- und abschaltbare Induktionsspulen angeordnet sind, und
c) daß sich parallel zu den Statorteilen zwischen dem Dauermagneten und den beiden Statorteilen Leiterstränge erstrecken, die an den axialen Enden der Statorteile zu einer oder mehreren Fokussierspulen zusammengefaßt sind.

Ein derartiger elektrodynamischer Aktuator besteht damit nur noch aus einem Linearmotor und einem dem Läufer dieses Linearmotors zugeordneten Fokussier-Aktuator, wobei der Magnet des Linearmotors zugleich der Magnet des Fokussier-Aktuators ist. Die einzigen, den Linearmotor ergänzenden Bauteile sind dabei die problemlos zu fertigende und anzubringende Fokussierspule(n) und die nachgiebige Lagerung des Dauermagneten in vertikaler Richtung. Ein derartiger elektrodynamischer Aktuator ist außerordentlich wirtschaftlich erstellbar; seine Ansteuerung wirft keine Probleme auf.

Nach einer weiteren Ausgestaltung der Erfindung ist vorgesehen, daß der Dauermagnet durchgehend quer zur Verschieberichtung magnetisiert und längs einer parallel zur Verschieberichtung verlaufende Verschiebeachse verschieb- und um diese Verschiebeachse kippbar gelagert ist, wobei die optische Einheit über einen Ausleger vom Dauermagneten getragen wird. Dabei ist zur Fokussierung vorgesehen, daß sich längs jedes Statorteiles zwischen diesem und dem Dauermagneten je ein Leiterstrang einer einzigen Fokussierspule erstreckt.

Dieser Aktuatoraufbau ist einfach und arbeitet sehr empfindlich und schnell. Die Fokussierspule erzeugt ein Drehmoment, mit dem die optische Einheit um kleine Beträge gehoben oder gesenkt wird.

Nach einer weiteren Ausgestaltung dieser Ausführungsform der Erfindung mit nur einer Fokussierspule ist vorgesehen, daß sich längs jedes Statorteiles zwischen diesem und dem Dauermagneten jeweils ein Leiterstrang von in die Mittelebene fallenden Fokussierspulen erstreckt, die außerhalb der Statorteile mit Leitersträngen zurückgeführt sind. Ist die Stromrichtung in den beiden Fokussierspulen gleichsinnig, dann bilden die resultierenden Kräfte ein Drehmoment, wie bei der ersteren Ausführungsform.

Bei einer weiteren Ausführungsform des Aktuators mit an einem Schwenkbarm angeordneter Optik ist vorgesehen, daß sich parallel zur Verschieberichtung zwischen den Statorteilen und dem Dauermagneten Fokussierspulen erstrecken, die jeweils aus zwei beabstandeten Leitersträngen gebildet sind, die sich oberhalb und unterhalb der Mittelebene in zu dieser senkrechten Spulenebenen befinden. Sind die Fokussierspulen gegensinnig erregt, dann ergibt sich auch hier wieder ein Drehmoment, das auf den die optische Einheit tragenden Ausleger einwirkt.

Es kann in Weiterbildung der Erfindung vorgesehen sein, daß die Fokussierspulen in senkrechten Spulenebenen paarweise nebeneinander beiderseits des Dauermagneten angeordnet sind, so daß neben dem Dauermagneten in den Spulenebenen Leiterstränge liegen. Werden die Spulen der einen und der anderen Seite gegensinnig erregt, dann ergibt sich wieder ein auf den Ausleger und die optische Einheit wirkendes Drehmoment.

Nach einer weiteren Ausgestaltung der Erfindung ist vorgesehen, daß der Dauermagnet aus mehreren Einzelmagnetteilen aufgebaut ist, von denen, in Verschieberichtung gesehen, zwei auf Abstand liegende Außenmagnetteile gleichsinnig quer zur Verschieberichtung magnetisiert sind, und daß diese Außenmagnetteile zwischen sich Innenmagnetteile einschließen, die senkrecht zur Mittelebene aufeinander aufliegen und aufeinander zu magnetisiert sind, wobei der Dauermagnet parallel zur Mittelebene verschieblich und überwiegend senkrecht zur Mittelebene heb- und senkbar ist, wobei sich zwischen dem Dauermagneten und den Statorteilen jeweils ein Leiterstrang einer einzigen Fokussierspule erstreckt. Bei dieser Ausgestaltung der Erfindung bildet sich eine Hebekraft und teilweise auch ein Drehmoment aus, das auf den Magneten einwirkt.

Nach einer weiteren Ausgestaltung der Erfindung ist vorgesehen, daß der Dauermagnet durchgehend in einer Richtung senkrecht zur Aktuatorlängsrichtung magnetisiert ist, daß der Dauermagnet parallel zur Mittelebene in Aktuatorlängsrichtung verschieblich und senkrecht zur Mittelebene heb- und senkbar ist und daß sich jeweils zwischen einem Statorteil und dem Dauermagneten beiderseits der Mittelebene eine Fokussierspule befindet, wobei die jeweils zwei Spulen an beiden Seiten des Dauermagneten in gemeinsamen Spulenebenen senkrecht zur Mittelebene angeordnet sind. Bei gleichsinniger Ansteuerung der Spulen auf beiden Seiten des Magneten bildet sich eine Hebekraft aus, die auf den Magneten wirkt.

Nach einer weiteren Ausgetaltung der Erfindung ist vorgesehen, daß der Dauermagnet durchgehend in einer Richtung parallel zur Mittelebene magnetisiert ist, daß der Dauermagnet parallel zur Mittelebene verschieblich und senkrecht zur Mittelebene heb- und senkbar ist und daß sich längs jedes Statorteiles zwischen diesem und dem Dauermagneten jeweils ein Leiterstrang von in die Mittelebene fallenden Fokussierspulen erstreckt, die außerhalb der Statorteile zurückgeführt sind. Bei gegensinniger Ansteuerung der Spulen ergibt sich eine auf den Magneten wirkende Hebekraft.

Nach einer weiteren Ausgestaltung der Erfindung ist vorgesehen, daß der Dauermagnet durchgehend in einer Richtung parallel zur Mittelebene und quer zur Aktuatorlängsrichtung magnetisiert ist, daß der Dauermagnet parallel zur Mittelebene und den Statorteilen verschieblich und senkrecht zur Mittelebene heb- und senkbar ist und daß sich parallel zur Verschieberichtung zwischen den Statorteilen und dem Dauermagneten Fokussierspulen erstrecken, die jeweils aus zwei beabstandeten Leitersträngen gebildet sind, die sich oberhalb und unterhalb der Mittelebene in zu dieser senkrechten Spulenebenen befinden. Auch in diesem Fall ergibt sich bei gleichsinniger Ansteuerung eine auf den Magneten wirkende Hebekraft.

Nach einer weiteren Ausgestaltung der Erfindung ist vorgesehen, daß der Dauermagnet auf einem parallel zu den Statorteilen verschieblichen Schlitten nachgiebig, z. B. federelastisch, gelagert ist. Die Ausbildung eines solchen Schlittens kann ganz verschieden sein; so kann er beispielsweise auf Führungsschienen, wie ein Reiter, oder mittels Rollen, wie ein Wagen, verfahren werden.

Nach einer weiteren Ausgetaltung der Erfindung ist vorgesehen, daß die parallelen Enden der Statorteile ohne magnetische Verbindung miteinander offen auslaufen. Duch das Offenhalten der Statorenden läßt sich eine wirksame Steuerung der Axial-Bewegung erreichen.

Die Erfindung wird anhand des in der Zeichnung dargestellten Ausführungsbeispieles näher erläutert. Es zeigen:
Fig. 1 einen elektrodynamischen Aktuator für optische Speichersysteme mit einem Linearmotor, an dem ein Aktuatormagnet mit einer optischen Einheit längsverschiebbar und kippbar gelagert ist, in schaubildlicher Darstellung,
Fig. 1a ein Prinzipbild des Aktuators nach Fig. 1 und
Fig. 1b eine Abwandlung des Ansteuerprinzips nach Fig. 1 und 2,
Fig. 2 den Aktuator nach Fig. 1 mit einer anderen Fokussierspulenanordnung,
Fig. 2a ein Prinzipbild der Anordnung nach Fig. 2,
Fig. 3, 3a und 4, 4a weitere Ausführungsformen des Aktuators mit kippbarem Magneten und unterschiedlichen Fokussierspulenanordnungen,
Fig. 5, 5a; 6, 6a; 7, 7a; 8, 8a weitere Ausführungsformen des elektrodynamischen Aktuators mit unterschiedlichen Fokussierspulenanordnungen.

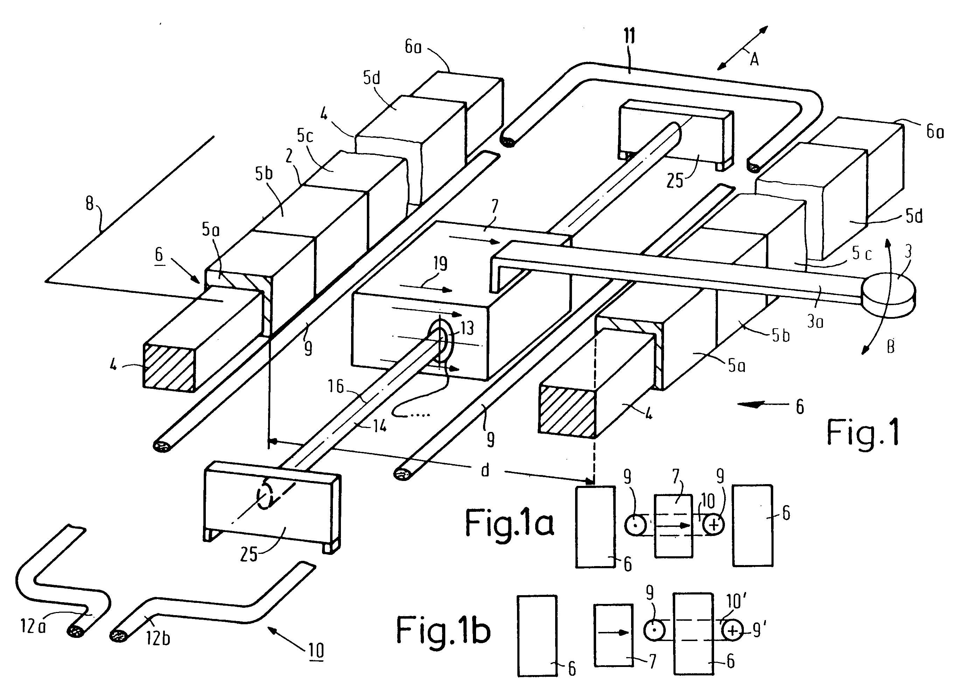

Ein in Fig. 1 schaubildlich dargestellter elektrodynamischer Aktuator, der insbesondere für optische Speichersysteme geeignet ist, ist in der Lage, zwei unabhängig voneinander ablaufende Bewegungen auszuführen. Eine Bewegungsrichtung, die durch einen Pfeil A angegeben ist, soll dabei eine Bewegung einer optischen Einheit 3 auf einer Länge von ca. 200 mm bis 300 mm ermöglichen. Die Länge des Weges ist bei der Abtastung von umlaufenden Speicherplatten abhängig vom Plattendurchmesser. In einer durch einen Pfeil B angegebenen, schwach bogenförmigen Bewegung braucht sich die optische Einheit 3 nur um wenige Millimeter zu bewegen.

Der elektrodynamische Aktuator kann im Prinzip aus einem Linearmotor bestehen, wie er in der DE-PS 25 42 299 beschrieben ist. Nähere Einzelheiten, auf die im Rahmen dieser Beschreibung nicht eingegangen wird, könnnen deshalb dieser DE-PS entnommen werden.

Der die Basis des Aktuators bildende Linearmotor besteht aus zwei stabförmigen Statoreisen 4, auf denen Induktionsspulen 5a, 5b, 5c, 5d ... aufsitzen. Die einzelnen Statorspulen 5a bis 5d der beiden Statoreisen 4 können unabhängig voneinander erregt werden. Die beiden Statoreisen 4 und die auf ihnen aufsitzenden Induktionsspulen 5 bilden im folgenden als Statorteile 6 bezeichnete Einheiten, zwischen denen ein Magnetfeld aufbaubar ist.

Die Statorteile 6 sind auf Abstand voneinander angeordnet, und ihre axialen Enden 6a sind offen, d. h. nicht über magnetisch leitende Brücken miteinander verbunden. Die Statorteile 6 sind in einem gegenseitigen Abstand d angeordnet, so daß zwischen ihnen Platz bleibt für das Anordnen eines Dauermagneten 7. Durch die beiden Statorteile 6 läßt sich eine Mittelebene 8 legen, in die Leiterstränge 9 einer Fokussierspule 10 fallen. Die Leiterstränge 9 sind in der Zeichnung im Bereich der in der Darstellung hinten gelegenen Enden 6a der Statorteile 6 über eine Brücke 11 verbunden. Ihre Anschlußenden 12a und 12b sind zu einer nicht beschriebenen Steuervorrichtung geführt. Die Fokussierspule 10 ist in der Zeichnung der Übersichtlichkeit wegen als dicker Draht dargestellt. In der Praxis wird diese Fokussierspule 10 mehrlagig aus dünnem Draht gefertigt sein. Die Höhe der Spulen soll im allgemeinen der Höhe des Statoreisens entsprechen.

Der Dauermagnet 7 ist in Fig. 1 mit einer in Aktuatorlängsrichtung verlaufenden Bohrung 13 versehen. Durch die Bohrung 13 verläuft eine Spurstange 14, die in Lagerböcken 15 gelagert ist. Die Achse der Spurstange 14 ist mit 16 bezeichnet. An dem Dauermagneten, der quer zur Achse 16 in der Richtung 19 magnetisiert ist, greift ein Ausleger 3a an, der die optische Einheit 3 trägt, die um den Doppelpfeil B verschwenken kann. Der Dauermagnet 7 ist auf der Spurstange 14 reibungsarm und verschwenk- oder verkippbar gelagert.

Der Bewegungsweg des Dauermagneten 7 in Richtung des Doppelpfeiles A kann etwa 200 mm bis 300 mm je nach Auslegung des Aktuators betragen. Die überlagerte Schwenkbewegung des Dauermagneten 7 in Richtung des Doppelpfeiles B beträgt nur wenige Millimeter. Die Bewegung in Richtung des Doppelpfeiles A entspricht bei einem Abtasten einer umlaufenden, ein- oder auszulesenden Platte einer Radialbewegung gegenüber der Platte. Die Bewegung in Richtung des Doppelpfeiles B, die der Bewegung in Richtung des Doppelpfeiles A überlagert ist und die vom Dauermagneten 7 allein ausgeführt wird, entspricht einer Fokussierbewegung in Richtung auf die umlaufende Platte.

Die Bewegung des Dauermagneten 7 in Richtung des Doppelpfeiles A kommt in der Weise zustande, daß die einzelnen Induktionsspulen 5, die dem Dauermagneten 7 gegenüberliegen, in der gewünschten Verfahrrichtung der Reihe nach erregt werden, wodurch ein in der gewünschten Bewegungsrichtung fortlaufendes Magnetisierungsfeld entsteht, das den Dauermagneten 7 mitnimmt. Soll eine Fokussierbewegung in Richtung des Doppelpfeiles B erfolgen, dann wird die Fokussierspule 10 in der gewünschten Fokussierrichtung erregt. Die Erregung ist aus Fig. 1a zu erkennen. Auf den Dauermagneten wirkt dabei das Magnetfeld der Fokussierspule 10. Der Dauermagnet dreht sich nach Maßgabe der Erregung der Fokussierspule 10. Wird auch die Induktionsspule 5 bestromt, so daß sich die Felder der Spulen 5 und 10 überlagern, so wird eine kombinierte Axial- und Fokusbewegung ausgeführt.

Fig. 1b zeigt einen abgewandelten Aufbau des Aktuators, bei dem die Fokussierspule 10' um eines der Statorteile 6 verläuft mit Leitersträngen 9 und 9'. Bei dieser abgewandelten Bauart ergibt sich außer einem Drehmoment auch noch eine Hebekraft.

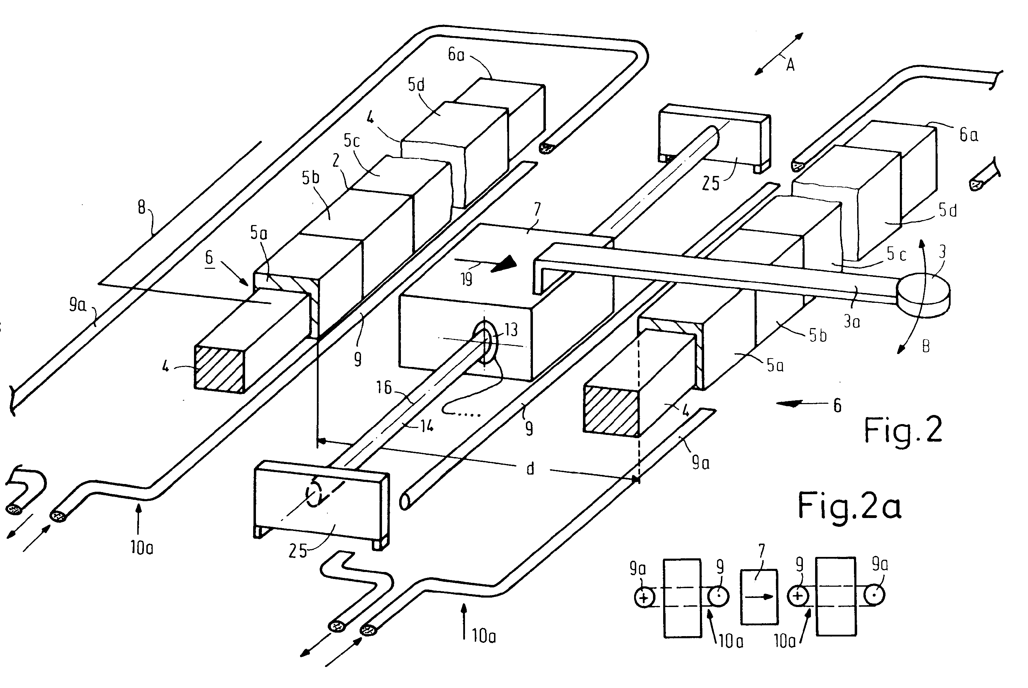

Fig. 2 zeigt schaubildlich eine Abwandlung der Ausführungsform nach Fig. 1. In diesem Fall ist nur die Fokussierspulenanordnung abgewandelt, und zwar derart, daß sich längs jedes Statorteiles 6 zwischen diesem und dem Dauermagneten 7 jeweils ein Leiterstrang 9 von in die Mittelebene 8 fallenden Fokussierspulen 10a erstreckt, die außerhalb der Statorteile 6 mit Leitersträngen 9a zurückgeführt sind.

Wenn die Fokussierspulen, wie Fig. 2a zeigt, gleichsinnig erregt werden, dann ergibt sich ein auf den Dauermagneten 7 einwirkendes Drehmoment um die Achse 16.

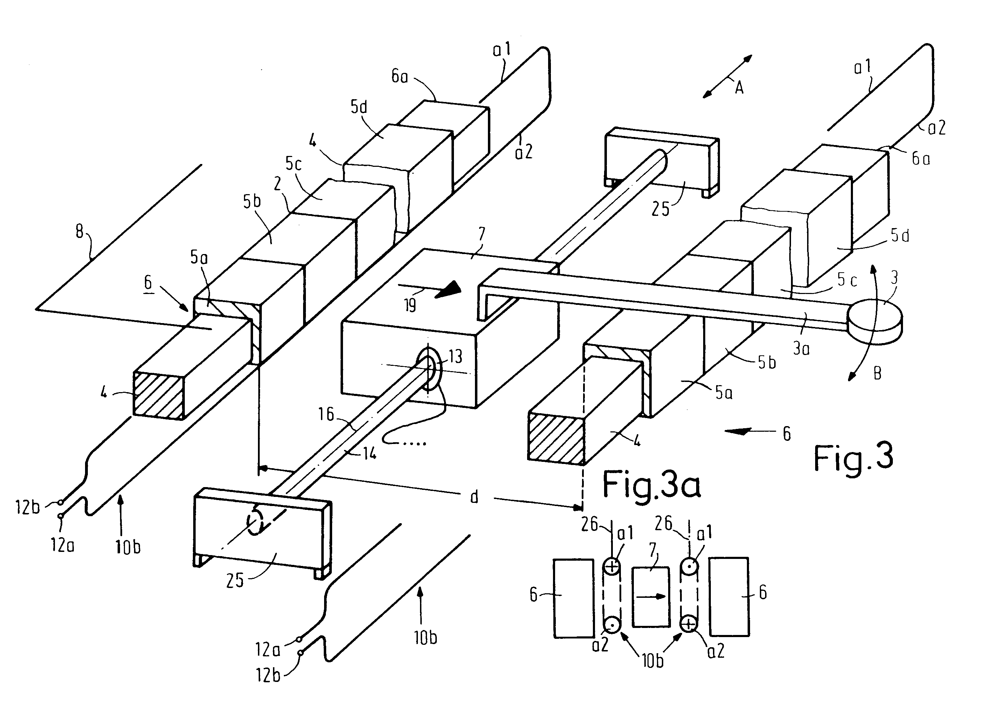

Fig. 3 zeigt schaubildlich eine Abwandlung der Ausführungsform nach Fig. 1 oder 2. Wieder ist nur die Fokussierspulenanordnung abgeändert, und zwar derart, daß sich parallel zur Verschieberichtung A zwischen den Statorteilen 6 und dem Dauermagneten 7 Fokussierspulen 10b erstrecken, die jeweils aus zwei beabstandeten Leitersträngen a₁, a₂ gebildet sind, die sich oberhalb und unterhalb der Mittelebene 8 in zu dieser senkrechten Spulenebenen 26 befinden.

Wenn die Fokussierspulen, wie in Fig. 3a dargestellt, gegensinnig erregt sind, ergibt sich ein Drehmoment um die Achse 16.

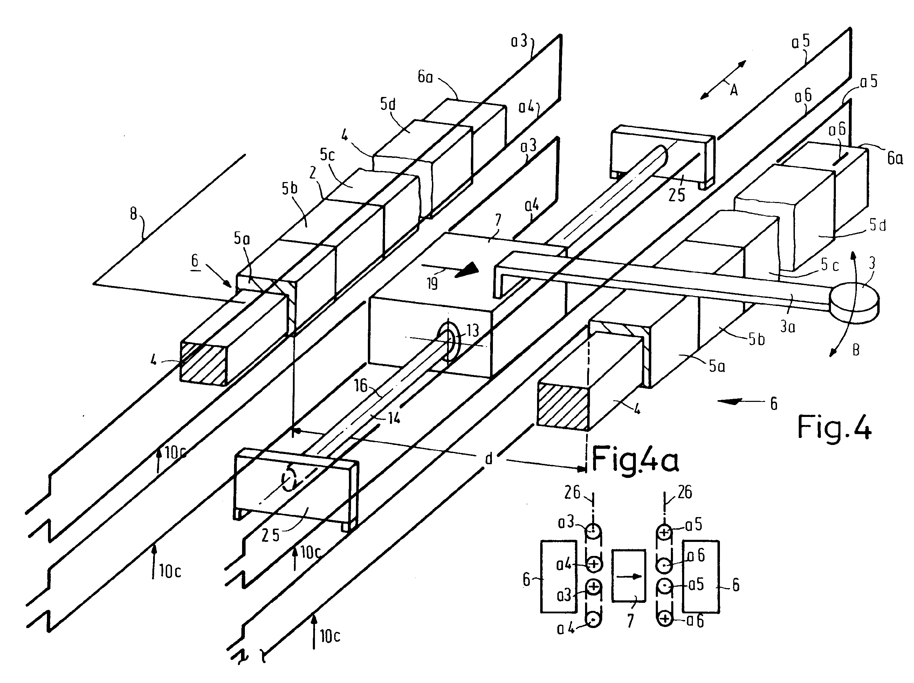

Fig. 4 zeigt schaubildlich eine Abwandlung der Ausführungsformen nach den Fig. 1 bis 3. Die Fokussierspulenanordnung ist in diesem Fall gegenüber der nach Fig. 3 derart abgewandelt, daß die Fokussierspulen 10c in senkrechten Spulenelementen 26 paarweise nebeneinander beiderseits des Dauermagneten 7 angeordnet sind, so daß neben dem Dauermagneten in den Spulenebenen 26 einerseits Leiterstränge a₃, a₄ und andererseits a₅ und a₆ liegen. Werden die Fokussierspulen 10c im oberen Teil der Spulenebenen gegensinnig und unteren Teil zwar auch gegensinnig, aber zusätzlich umgekehrt zu denen im oberen Teil erregt (Fig. 4a), dann ergibt sich wieder ein Drehmoment, das bestrebt ist, den Dauermagneten 7 um die Achse 16 zu drehen.

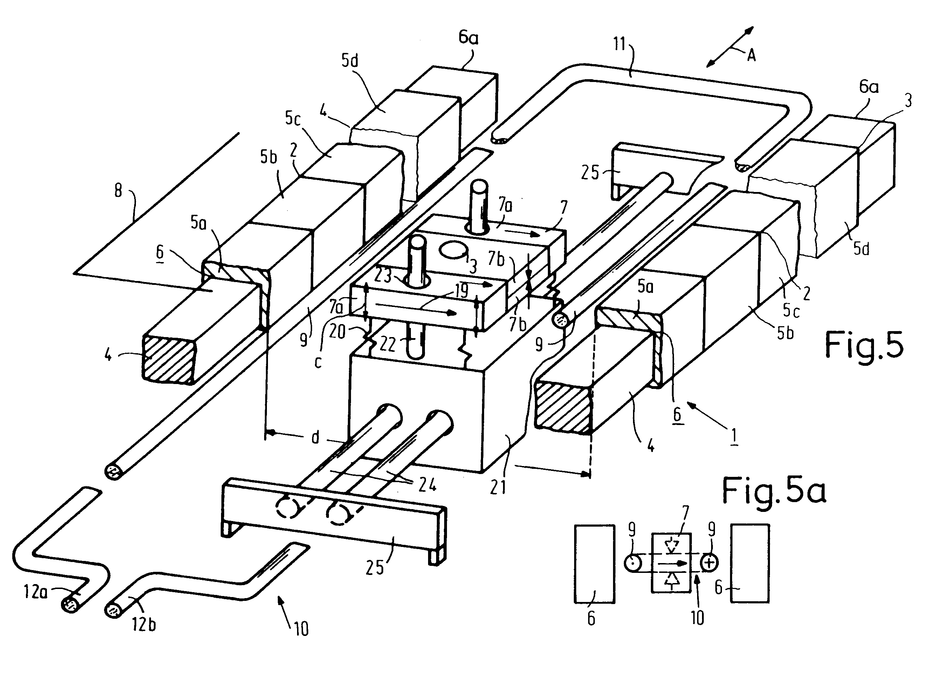

Fig. 5 bis 8 zeigen Ausführungsbeispiele, bei denen der Dauermagnet vom Feld zwischen den Statorteilen 6 überwiegend nur angehoben und abgesenkt wird mittels einer Hebekraft. In diesen Beispielen stützt sich der Dauermagnet 7 federelastisch mittels Federn 20 auf einem Schlitten 21 ab. Die als Spiralfedern angedeuteten federelastischen Federelemente können ebensogut als Gummifedern oder dergl. ausgeführt sein. Wichtig ist nur, daß sich der Dauermagnet 7 mit möglichst geringer Reibung um Stifte 22 des Schlittens 21 gegenüber dem Schlitten 21 bewegen kann. Die Stifte 22 sind im Schlitten 21 befestigt und greifen durch Öffnungen 23 des Dauermagneten 7 hindurch. Der Magnet soll sich entlang der Stifte 22 nur auf und ab bewegen können. Die Stifte sollen dem Magneten deshalb nur einen Freiheitsgrad geben, d. h. alle anderen Bewegungen sollen ausgeschlossen werden.

Der Schlitten 21 ist als Reiter auf Schienen 24 geführt, die an den axialen Enden des Linearmotors von Lagerböcken 25 ortsfest gehalten werden. Die Schienen 24 greifen durch den Schlitten 21 hindurch; der Schlitten 21 ist auf den Schienen 24 reibungsarm gelagert. Selbstveständlich können die Schienen 24 und der Schlitten 21 auch andersartig zusammenarbeiten. So kann beispielsweise der Schlitten 21 auch als Wagen mittels Rädern auf Schienen verfahren werden.

Bei Fig. 5 ist die optische Einheit 3 bei der Ausführungsform mittig im Dauermagneten 7 angeordnet. Diese Anordnung im Schwerpunkt führt zu einem guten Gewichtsausgleich des auf den Stiften 22 verschieblichen Dauermagneten 7. Der Dauermagnet 7 selbst besteht aus mehreren Einzelmagneten, die zu einer kompakten Einheit zusammengefügt, beispielsweise geklebt sind. In Verschieberichtung (Doppelpfeil A) befinden sich auf Abstand zwei streifenförmige Außenmagnetteile 7a, die gleichsinnig quer zur Verschieberichtung magnetisiert sind. Diese Außenmagnetteile 7a schließen zwischen sich Innenmagnetteile 7b ein, die senkrecht zur Mittelebene 8 aufeinander aufliegen und aufeinander zu magnetisiert sind. Dieser Dauermagnet 7 mit seinen Magnetteilen 7a und 7b ist in Richtung eines Doppelpfeiles 7c parallel zur Mittelebene 8 gegenüber dem Schlitten 21 auf und ab bewegbar bzw. federnd abgestützt verschieblich. Es gibt also bei dem Ausführungsbeispiel nach Fig. 5 zwei unabhängige, translatorische Bewegungen in zwei senkrecht zueinander stehenden Richtungen, nämlich den Richtungen A und C.

Fig. 5a zeigt das Wirkprinzip der Anordnung nach Fig. 5, aus der man erkennt, daß sich beiderseits des Dauermagneten 7 zwischen diesem und den Statorteilen 6 jeweils ein Leiterstrang 9 einer einzigen Fokussierspule erstreckt. Mit dieser Anordnung läßt sich auf den Dauermagneten 7 eine Hebekraft ausüben, jedoch auch ein gewisses Drehmoment um die Achse 16a. Die Führung mittels der Stifte 22 verhindert eine Verdrehung des Dauermagneten 7 durch das Drehmoment, so daß nur eine lineare Auf- oder Abbewegung aufgrund der Hebekraft entsteht.

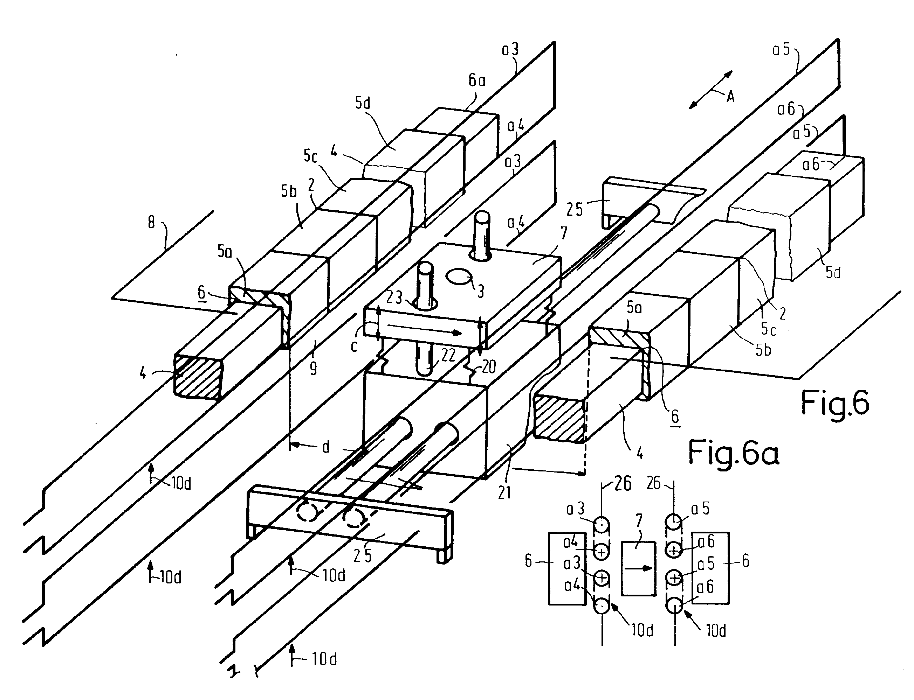

Fig. 6 zeigt eine Ausführungsform mit mittig im Dauermagneten 7 angeordneter optischer Einheit 3. Der Dauermagnet 7 ist quer zur Aktuatorlängsrichtung vollflächig magnetisiert. Die einzelne Fokussierspule 10 nach Fig. 5 ist ersetzt durch zwei Fokussierspulen 10d, die senkrecht zur Mittelebene 8 zwischen Dauermagnet 7 und Statorteilen 6 verlaufen. Die Leiterstränge a₃, a₄ und a₅, a₆ liegen damit beiderseits der Mittelebene 8 in senkrecht zur Mittelebene 8 verlaufenden Spulenebenen 26. Die Fokussierspulen 10d sind über ihre Anschlußenden an eine nicht dargestellte Steuereinrichtung angeschlossen. Auch bei diesem Aufbau bewegt sich der Dauermagnet 7 gegenüber dem Schlitten 14 in Richtung des Doppelpfeiles C entsprechend der Ansteuerung auf und ab senkrecht zur Verfahrrichtung A, wenn die Fokussierspulen 10d nach Maßgabe der in Fig. 6a dargestellten Stromrichtung durchflossen werden. Bei der Darstellung nach Fig. 6a sind die Fokussierspulen 10d dabei in beiden Spulenebenen 26 im gleichen Sinn gegenläufig stromdurchflossen.

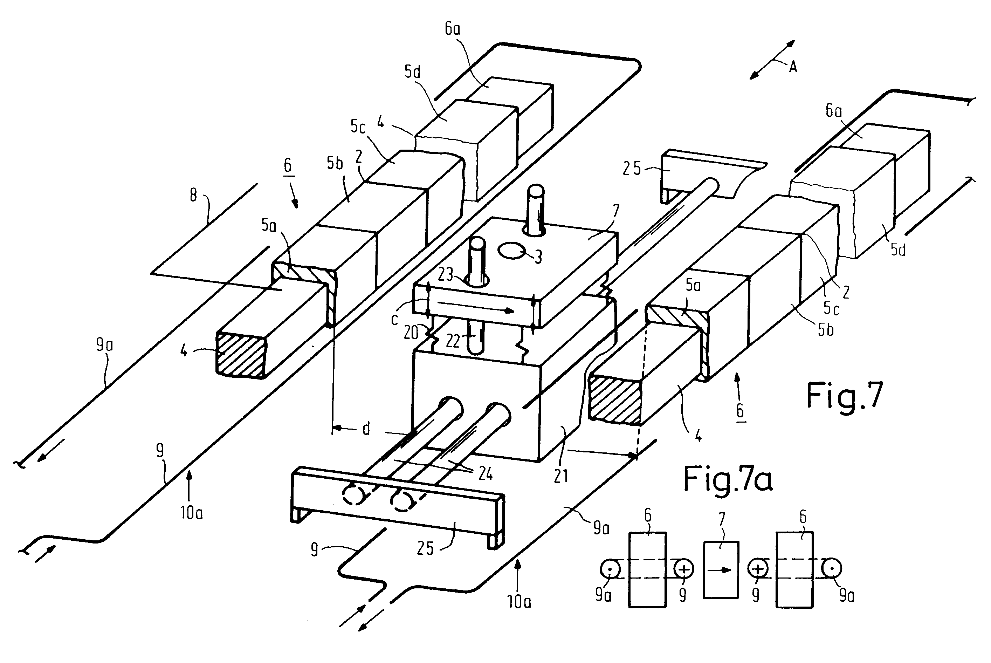

Fig. 7 zeigt eine Ausführungsform, bei der die Fokussierspulen 10a in die Mittelebene 8 fallen. Jeweils ein Leiterstrang 9 befindet sich zwischen dem Dauermagneten 7 und den Statorteilen, während der andere Leiterstrang 9a außerhalb der Magnetanordnung zurückgeführt wird. Sind die Fokussierspulen 10a nach Maßgabe der Fig. 7a bei quer magnetisiertem Dauermagneten 7 gleichsinnig stromdurchflossen, dann wirkt auf den Dauermagneten 7 eine Hebekraft ein.

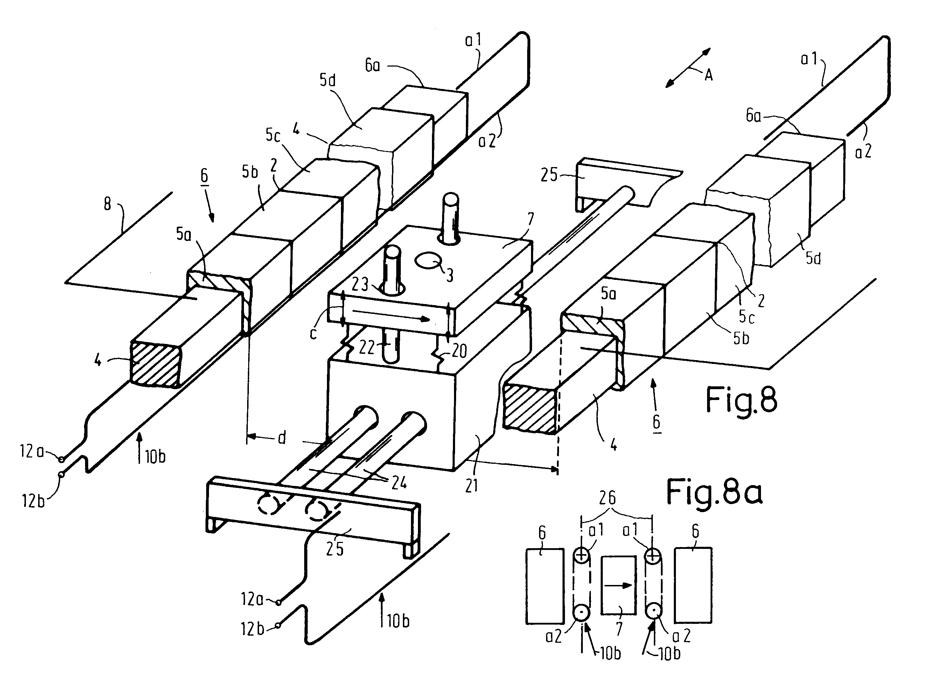

Fig. 8 zeigt eine weitere Ausführungsform mit einem parallel zur Mittelebene 8 und quer zur Aktuatorlängsrichtung magnetisierten Dauermagneten 7. Der Dauermagnet 7 ist wie bei den Ausführungsformen nach Fig. 5 bis 7 parallel zur Mittelebene 8 und die Statorteile 6 auf einem Schlitten 21 verschieblich und senkrecht zur Mittelebene 8 heb- und senkbar. Zwischen den Statorteilen 6 und dem Dauermagneten 7 befinden sich Fokussierspulen 10b, die jeweils aus zwei beabstandeten Leiterstängen a₁, a₂ gebildet sind, die sich oberhalb und unterhalb der Mittelebene 8 in zu dieser senkrechten Spulenebenen 26 befinden. Werden beide Fokussierspulen gleichsinnig erregt, wie es aus Fig. 8a zu ersehen ist, dann wirkt auf den Dauermagneten 7 eine Hebekraft in Richtung des Pfeiles C ein.

## Patentansprüche

1. Elektrodynamischer Aktuator für optische Speichersysteme mit einer elektromechanischen Stellvorrichtung, die eine optische Ein- bzw. Ausleseeinheit (3) zu Ein- bzw. Auslese-Arbeitspositionen gegenüber einem Speichermedium bewegt, wobei ein von der optischen Einheit auf die Arbeitspositionen gelenktes Strahlenbündel gegenüber diesen Arbeitspositionen durch Verstellen der Optik der optischen Einheit (3) fokussiert wird, wobei die Stellvorrichtung aus einem Linearmotor mit parallel und auf Abstand (d) angeordneten Statorteilen (6) besteht, die gebildet werden von stabförmigen Statoreisen (4), auf denen statorfeste die Statoreisen umschließende Induktionsspulen (5) angeordnet sind, wobei zwischen diesen Statorteilen (6) ein Dauermagnet (7) vorgesehen ist, der zwischen den axialen Enden (6a) der Statorteile (6) längsverschieblich in einer Führungsrichtung (A) geführt ist, und wobei dieser Dauermagnet (7) die Optik der optischen Einheit (3) trägt und ein magnetisches Feld senkrecht zur Führungsrichtung (A) und parallel zu einer Mittelebene (8) besitzt, in welcher die Statoreisen (4), die Induktionsspulen und der Dauermagnet selbst angeordnet sind, dadurch gekennzeichnet,
a) daß der Dauermagnet (7) zwischen den Statorteilen (6) gegenüber der gemeinsamen Mittelebene (8) bewegbar ist,
b) daß auf jedem stabförmigen Statoreisen mehrere, in Längsrichtung aufeinander folgende, separat zu- und abschaltbare Induktionsspulen angeordnet sind und
c) daß sich parallel zu den Statorteilen (6) zwischen dem Dauermagneten (7) und den beiden Statorteilen (7) Leiterstränge (9) erstrecken, die an den axialen Enden (6a) der Statorteile (6) zu einer oder mehreren Fokussierspulen (10) zusammengefaßt sind.

2. Elektrodynamischer Aktuator nach Anspruch 1, dadurch gekennzeichnet, daß der Dauermagnet (7) durchgehend quer zur Verschieberichtung (A) magnetisiert und längs einer parallel zur Verschieberichtung (A) verlaufenden Verschiebeachse (16) verschieb- und um diese Verschiebeachse (16) kippbar gelagert ist, wobei die optische Einheit (3) über einen Ausleger (3a) vom Dauermagneten (7) getragen wird.

3. Elektrodynamischer Aktuator nach einem der Ansprüche 1 oder 2, dadurch gekennzeichnet, daß sich längs jedes Statorteiles (6) zwischen diesem und dem Dauermagneten (7) je ein Leiterstrang (9) einer einzigen Fokussierspule (10) erstreckt.

4. Elektrodynamischer Aktuator nach einem der Ansprüche 1 oder 2, dadurch gekennzeichnet, daß sich längs jedes Statorteiles (6) zwischen diesem und dem Dauermagneten (7) jeweils ein Leiterstrang (9) von in die Mittelebene (8) fallenden Fokussierspulen (10a) erstreckt, die außerhalb der Statorteile (6) mit Leitersträngen (9a) zurückgeführt sind.

5. Elektrodynamischer Aktuator nach einem der Ansprüche 1 oder 2, dadurch gekennzeichnet, daß sich parallel zur Verschieberichtung (A) zwischen den Statorteilen (6) und dem Dauermagneten (7) Fokussierspulen (10b) erstrecken, die jeweils aus zwei beabstandeten Leitersträngen (a₁, a₂) gebildet sind, die sich oberhalb und unterhalb der Mittelebene (8) in zu dieser senkrechten Spulenebenen (26) befinden.

6. Elektrodynamischer Aktuator nach einem der Ansprüche 1, 2 oder 5, dadurch gekennzeichnet, daß die Fokussierspulen (10c) in senkrechten Spulenebenen (26) paarweise nebeneinander beiderseits des Dauermagneten (7) angeordnet sind, so daß neben dem Dauermagneten in den Spulenebenen (26) einerseits (a₃, a₄) und andererseits (a₅, a₅) Leiterstränge liegen.

7. Elektrodynamischer Aktuator nach Anspruch 1, dadurch gekennzeichnet, daß der Dauermagnet (7) aus mehreren Einzelmagnetteilen (7a, 7b) aufgebaut ist, von denen, in Verschieberichtung (A) gesehen, zwei auf Abstand liegende Außenmagnetteile (7a) gleichsinnig quer zur Verschieberichtung (A) magnetisiert sind, und daß diese Außenmagnetteile (7a) zwischen sich Innenmagnetteile (7b) einschließen, die senkrecht zur Mittelebene (8) aufeinander aufliegen und aufeinander zu magnetisiert sind, wobei der Dauermagnet parallel zur Mittelebene (8) verschieblich und überwiegend senkrecht zur Mittelebene (8) heb- und senkbar ist, wobei sich zwischen dem Dauermagneten (7) und den Statorteilen (6) jeweils ein Leiterstrang (9) einer einzigen Fokussierspule erstreckt.

8. Elektrodynamischer Aktuator nach Anspruch 1, dadurch gekennzeichnet, daß der Dauermagnet (7) durchgehend in einer Richtung senkrecht zur Aktuatorlängsrichtung magnetisiert ist, daß der Dauermagnet (7) parallel zur Mittelebene (8) in Aktuatorlängsrichtung verschieblich und senkrecht zur Mittelebene (8) heb- und senkbar ist und daß sich jeweils zwischen einem Statorteil (6) und dem Dauermagneten (7) beiderseits der Mittelebene (8) eine Fokussierspule (10d) befindet, wobei die jeweils zwei Spulen (10d) an beiden Seiten des Dauermagneten (7) in gemeinsamen Spulenebenen (26) senkrecht zur Mittelebene (8) angeordnet sind.

9. Elektrodynamischer Aktuator nach Anspruch 1, dadurch gekennzeichnet, daß der Dauermagnet (7) durchgehend in einer Richtung parallel zur Mittelebene (8) magnetisiert ist, daß der Dauermagnet (7) parallel zur Mittelebene (8) verschieblich und senkrecht zur Mittelebene (8) heb- und senkbar ist und daß sich längs jedes Statorteiles (6) zwischen diesem und dem Dauermagneten (7) jeweils ein Leiterstrang (9) von in die Mittelebene (8) fallenden Fokussierspulen erstreckt, die außerhalb der Statorteile (6) zurückgeführt sind.

10. Elektrodynamischer Aktuator nach Anspruch 1, dadurch gekennzeichnet, daß der Dauermagnet (7) durchgehend in einer Richtung parallel zur Mittelebene (8) und quer zur Aktuatorlängsrichtung magnetisiert ist, daß der Dauermagnet (7) parallel zur Mittelebene (8) und den Statorteilen (6) verschieblich und senkrecht zur Mittelebene (8) heb- und senkbar ist und daß sich parallel zur Verschieberichtung (A) zwischen den Statorteilen (6) und dem Dauermagneten (7) Fokussierspulen (10b) erstrecken, die jeweils aus zwei beabstandeten Leitersträngen (a₁, a₂) gebildet sind, die sich oberhalb und unterhalb der Mittelebene (8) in zu dieser senkrechten Spulenebenen (26) befinden.

11. Elektrodynamischer Aktuator nach einem der Ansprüche 1, und 7 bis 10, dadurch gekennzeichnet, daß der Dauermagnet (7) auf einem parallel zu den Statorteilen (6) verschieblichen Schlitten (14) nachgiebig, z. B. federelastisch, gelagert ist.

12. Elektrodynamischer Aktuator nach Anspruch 11, dadurch gekennzeichnet, daß der Schlitten auf parallel zu den Statorteilen (6) verlaufenden Schienen (17) verfahrbar ist.

13. Elektrodynamischer Aktuator nach einem der Ansprüche 1 bis 10, dadurch gekennzeichnet, daß die parallelen Enden (6a) der Statorteile (6) ohne Verbindung miteinander offen auslaufen.

## Claims

1. An electrodynamic actuator for optical storage systems comprising an electromechanical actuating device which is constructed to move an optical write and/or read unit (3) into write and/or read operating positions relative to a storage medium, a radiation beam which is aimed at the operating positions by the optical unit being focused at said positions by moving the optical system of the optical unit (3), the actuating device comprising a linear motor which comprises parallel stator sections (6), which are spaced by a distance (d) and which are constituted by rod-shaped stator irons (4) carrying induction coils (5) which are stationary relative to the stator and which surround the stator irons, a permanent magnet (7) being arranged between said stator sections (6) and being guided to be longitudinally movable in a direction (A) of translation between the axial ends (6a) of the stator sections (6), which permanent magnet (7) carries the optical system of the optical unit (3) and has a magnetic field which is oriented perpendicularly to the direction (A) of translation and parallel to a central plane (8) in which the stator irons (4), the induction coils and the permanent magnet itself are arranged, characterised in that
a) the permanent magnet (7) is movable between the stator sections (6) relative to the common central plane (8),
b) a plurality of induction coils are arranged after each other in the longitudinal direction on each rod-shaped stator iron, and can be switched into and out of circuit separately, and
c) conductor bundles (9) extend parallel to the stator sections (6) between the permanent magnet (7) and the two stator sections (7) and are combined at the axial ends (6a) of the stator sections (6) to form one or more focusing coils (10).

2. An electrodynamic actuator as claimed in Claim 1, characterised in that the permanent magnet (7) is magnetized transversely of the direction (A) of translation and is supported to be movable along a translation axis (16) parallel to the direction (A) of translation and to be pivotable about said axis (16), the optical unit (3) being carried by the permanent magnet (7) *via* a supporting arm (3a).

3. An electrodynamic actuator as claimed in Claim 1 or 2, characterised in that each time one conductor bundle (9) of a single focusing coil (10) extends along each stator section (6) between this section and the permanent magnet (7).

4. An electrodynamic actuator as claimed in Claim 1 or 2, characterised in that each time one conductor bundle (9) of focusing coils (10a) disposed in the central plane (8) extends along each stator section (6) between this section and the permanent magnet (7), which conductor bundles are returned outside the stator sections (6) via conductor bundles (9a).

5. An electrodynamic actuator as claimed in Claim 1 or 2, characterised in that focusing coils (10b) extend parallel to the direction (A) of translation between the stator sections (6) and the permanent magnet (7), and each comprise two spaced-apart conductor bundles (a₁, a₂), which are disposed above and below the central plane (8) in coil planes (26) perpendicular to this central plane.

6. An electrodynamic actuator as claimed in any one of the Claims 1, 2 or 5, characterised in that the focusing coils (10c) are juxtaposed in pairs in perpendicular coil planes (26) at opposite sides of the permanent magnet (7), so that conductor bundles extend at one side (a₃, a₄) and at the other side (a₅, a₅) of the permanent magnet (7) in the coil planes (26).

7. An electrodynamic actuator as claimed in Claim 1, characterised in that the permanent magnet (7) comprises a plurality of separate magnet parts (7a, 7b) of which, viewed in the direction (A) of translation, two spaced-apart outer magnet parts (7a) are magnetized in the same direction transverse to the direction (A) of translation, and in that inner magnet parts (7b), which are magnetized towards another, are interposed between said outer magnet parts (7a) and are superposed one on the other in a direction perpendicular to the central plane (8), the permanent magnet being arranged to be movable parallel to the central plane (8) and to be raised and lowered in a direction substantially perpendicular to the central plane (8), one conductor bundle (9) of a single focusing coil extending between the permanent magnet (7) and each stator section (6).

8. An electrodynamic actuator as claimed in Claim 1, characterised in that the permanent magnet (7) is bodily magnetized in a direction perpendicular to the longitudinal direction of the actuator, in that the permanent magnet (7) is arranged to be movable parallel to the central plane (8) in the longitudinal direction of the actuator and to be raised and lowered perpendicularly to the central plane (8), and in that between each stator section (6) and the permanent magnet (7) a focusing coil (10d) is arranged at opposite sides of the central plane (8), the two coils (10d) at both sides of the permanent magnet (7) being arranged in common coil planes (26) perpendicular to the central plane (8).

9. An electrodynamic actuator as claimed in Claim 1, characterised in that the permanent magnet (7) is bodily magnetized in a direction parallel to the central plane (8), in that the permanent magnet (7) is arranged to be movable parallel to the central plane (8) and to be raised and lowered perpendicularly to the central plane (8), and in that one conductor bundle (9) of focusing coils disposed in the central plane (8) extends along each stator section (6) between this section and the permanent magnet (7), which conductor bundles are returned outside the stator sections (6).

10. An electrodynamic actuator as claimed in Claim 1, characterised in that the permanent magnet (7) is bodily magnetized in a direction parallel to the central plane (8) and transverse to the longitudinal direction of the actuator, in that the permanent magnet (7) is arranged to be movable parallel to the central plane (8) and to the stator sections (6) and to be raised and lowered perpendicularly to the central plane (8), and in that focusing coils (10b) extend parallel to the direction (A) of translation between the stator sections (6) and the permanent magnet (7) and each comprise two spaced-apart conductor bundles (a₁, a₂) which are disposed above and below the central plane (8) in coil planes (26) perpendicular to this central plane.

11. An electrodynamic actuator as claimed in any one of the Claims 1 and 7 to 10, characterised in that the permanent magnet (7) is supported non-rigidly, for example elastically, on a slide (14) which is movable parallel to the stator sections (6).

12. An electrodynamic actuator as claimed in Claim 11, characterised in that the slide is movable on guide members (17) which extend parallel to the stator sections (6).

13. An electrodynamic actuator as claimed in any one of the Claims 1 to 10, characterised in that the parallel ends (6a) of the stator sections (6) terminate freely without a coupling to one another.

## Revendications

1. Actionneur électrodynamique pour systèmes à mémoire optique, avec un dispositif de réglage électromécanique, déplaçant un ensemble d'écriture, respectivement de lecture, optique (3) en des positions de travail d'écriture, respectivement de lecture, vis-à-vis d'un milieu de stockage-mémoire, un faisceau de rayons, dirigé par l'ensemble optique sur les positions de travail, étant focalisé en ces positions de travail, par réglage de l'optique de l'ensemble optique (3), le dispositif de réglage étant composé d'un moteur linéaire à parties stator (6) disposées parallèlement et suivant un espacement (d), les parties stator étant constituées par des fers de stator (4) en forme de barres, sur lesquels sont disposées des bobines d'induction (5) entourant les fers de stator fixes par rapport au stator, un aimant permanent (7) étant prévu entre ces parties stator (6) et guidé, longitudinalement, dans une direction de guidage (A) entre les extrémités axiales (6a) des parties stator (6) et cet aimant permanent (7) portant l'optique de l'ensemble optique (3) et comportant un champ magnétique, orienté perpendiculairement par rapport à la direction de guidage (A) et parallèlement par rapport à un plan médian (8), dans lequel les fers de stator (4), les bobines d'induction et l'aimant permanent lui-même sont disposés, caractérisé en ce que
a) l'aimant permanent (7) est déplaçable entre les parties stator (6), par rapport au plan médian (8) commun,
b) sur chaque partie stator en forme de barre sont disposées plusieurs bobines d'induction, se suivant les unes les autres dans la direction longitudinale et pouvant être mises en service et hors service séparément, et
c) en ce que des tronçons conducteurs (9) s'étendent parallèlement aux parties stator (6), entre l'aimant permanent (7) et les deux parties stator (6), ces tronçons conducteurs (9) étant groupés aux extrémités axiales (6a) des parties stator (6), en constituant une ou plusieurs bobines de focalisation (10).

2. Actionneur électrodynamique selon la revendication 1, caractérisé en ce que l'aimant permanent (7) est magnétisé de façon continue, transversalement par rapport à la direction de déplacement (A), et est monté de façon à pouvoir se déplacer le long d'un axe de déplacement (16) s'étendant parallèlement à la direction de déplacement (A) et à pouvoir basculer autour de cet axe de déplacement (16), l'ensemble optique (3) étant porté par l'aimant permanent (7) par l'intermédiaire d'un bras (3a).

3. Actionneur électrodynamique selon l'une des revendications 1 ou 2, caractérisé en ce qu'un tronçon conducteur (9) d'une bobine de focalisation (10) unique s'étend le long de chaque partie stator (6) entre celle-ci et l'aimant permanent (7).

4. Actionneur électrodynamique selon l'une des revendications 1 ou 2, caractérisé en ce que, le long de chaque partie stator (6), entre celle-ci et l'aimant permanent (7), s'étend un tronçon conducteur (9), constitué de bobines de focalisation (10a) situées dans le plan médian (8), bouclé à l'extérieur des parties stator (6) à l'aide de tronçons conducteurs (9a).

5. Actionneur électrodynamique selon l'une des revendications 1 ou 2, caractérisé en ce que, parallèlement au plan de déplacement (A), entre les parties stator (6) et l'aimant permanent (7) s'étendent des bobines de focalisation (10b) constituées chacune de deux tronçons conducteurs (a₁, a₂) espacés se trouvant au- dessus et au-dessous du plan médian (8), dans des plans de bobines (26) perpendiculaires à celui-ci.

6. Actionneur électrodynamique selon l'une des revendications 1, 2 ou 5, caractérisé en ce que les bobines de focalisation (10c) sont disposées dans des plans de bobines (26) perpendiculaires, par paires les unes à côté des autres, des deux côtés de l'aimant permanent (7), de sorte qu'outre l'aimant permanent sont situés dans les plans de bobines (26), d'une part, des tronçons conducteurs (a₃, a₄), et, d'autre part, des tronçons conducteurs (a₅, a₆).

7. Actionneur électrodynamique selon la revendication 1, caractérisé en ce que l'aimant permanent (7) est composé de plusieurs parties d'aimant (7a, 7b) individuelles, dont, en observant dans la direction du déplacement (A), deux parties extérieures d'aimant (7a), espacées, sont magnétisées dans le même sens, transversalement par rapport à la direction de déplacement (A), et en ce que ces parties extérieures d'aimant (7a) enclosent entre elles des parties intérieures d'aimant (7b), reposant l'une sur l'autre perpendiculairement par rapport au plan médian (8) et magnétisées l'une en direction de l'autre et l'aimant permanent étant déplaçable parallèlement au plan médian (8) et levable et abaissable principalement perpendiculairement par rapport au plan médian (8), un tronçon conducteur (9) d'une bobine de focalisation unique s'étendant chaque fois entre l'aimant permanent (7) et les parties stator (6).

8. Actionneur électrodynamique selon la revendication 1, caractérisé en ce que l'aimant permanent (7) est magnétisé de façon continue dans une direction perpendiculaire par rapport à la direction longitudinale de l'actionneur, en ce que l'aimant permanent (7) est déplaçable parallèlement au plan médian (8), dans la direction longitudinale de l'actionneur, et levable et abaissable perpendiculairement par rapport au plan médian (8), et en ce que, chaque fois, une bobine de focalisation (10d) se trouve entre une partie stator (6) et l'aimant permanent (7), des deux côtés du plan médian (8), les paires de bobines (10d) étant disposées des deux côtés de l'aimant permanent (7), dans des plans de bobines (26) communs, perpendiculairement par rapport au plan médian (8).

9. Actionneur électrodynamique selon la revendication 1, caractérisé en ce que l'aimant permanent (7) est magnétisé de façon continue dans une direction parallèle au plan médian (8), en ce que l'aimant permanent (7) est déplaçable parallèlement au plan médian (8) et levable et abaissable par rapport au plan médian (8) et en ce que, le long de chaque partie de stator (6), entre celle-ci et l'aimant permanent (7), s'étend un tronçon conducteur (9) de bobines de focalisation situées dans le plan médian (8), bouclé en passant à l'extérieur des parties stator (6).

10. Actionneur électrodynamique selon la revendication 1, caractérisé en ce que l'aimant permanent (7) est magnétisé de façon continue dans une direction parallèle au plan médian (8) et perpendiculairement par rapport à la direction longitudinale de l'actionneur, en ce que l'aimant permanent (7) est déplaçable parallèlement au plan médian (8) et levable et abaissable perpendiculairement par rapport au plan médian (8), et en ce que, parallèlement à la direction de déplacement (A), entre les parties stator (6) et l'aimant permanent (7), s'étendent des bobines de focalisation (10b), constituées chacune de deux tronçons conducteurs (a₁, a₂) espacés, se trouvant au-dessus et au-dessous du plan médian (8) dans des plans de bobines (26) perpendiculaires par rapport à celui-ci

11. Actionneur électrodynamique selon l'une des revendications 1, et 7 à 10, caractérisé en ce que l'aimant permanent (7) est monté avec possibilité de déplacement, par exemple avec l'élasticité d'un ressort, sur un chariot (21) déplaçable parallèlement par rapport aux parties stator (6).

12. Actionneur électrodynamique selon la revendication 11, caractérisé en ce que le chariot est déplaçable sur des glissières (17) s'étendant parallèlement aux parties stator (6).

13. Actionneur électrodynamique selon l'une des revendications 1 à 10, caractérisé en ce que les extrémités (6a) parallèles des parties stator (6) se projettent librement, sans liaison entre elles.
